# EUROPEAN PATENT APPLICATION

(11) **EP 4 571 287 A1**
(43) Date of publication of application: **18.06.2025**
(21) Application number: 24218558.5
(22) Date of filing: 10.12.2024
(51) Int. Cl.: G01N 3/62

(54) **SYSTEM AND METHOD FOR VERIFYING THE CALIBRATION OF A UNIAXIAL TESTING MACHINE**

(30) Priority: 12.12.2023 IT 202300026403
(71) Applicant: Devitech S.r.l., 24052 Azzano San Paolo (BG) (IT); 2CA S.r.l., 22015 Gravedona ed Uniti (CO) (IT)
(72) Inventor: Bassani, Pierpaolo, 24052 Azzano San Paolo BG (IT); Cima, Roberto, 22015 Gravedona ed Uniti CO (IT)
(74) Representative: Perani & Partners S.p.A.

(57) **Abstract**

The present invention relates to a system (1) for verifying the calibration of a machine (100) adapted to perform uniaxial tests on a specimen. Such system (1) is configured to determine the distribution of a force (F) exerted by the machine (100) along an axial direction (A-A) and comprises:
- a measurement unit (2), available in the machine (100) in place of the specimen, which has a measurement surface (20) and at least three force transducers (21a, 21b, 21c, 21d) each of which is functionally associated with a respective measurement portion (20a, 20b, 20c, 20d) of the measurement surface (20) and is configured to generate a measurement signal representative of the force (Fa, Fb, Fc, Fd) exerted on the respective measurement portion (20a, 20b, 20c, 20d),
- a reading unit (3) placed in signal communication with the measurement unit (2) to receive in input the measurement signals from the force transducers (21a, 21b, 21c, 21d) and provide them in output.

## Description

### Technical Field

The present invention relates to a system and a method for verifying the calibration of a machine adapted to perform uniaxial tests, in accordance with the preamble of claims 1 and 8, respectively.

In particular, but not exclusively, the system and method according to the present invention are useful in metrological analysis laboratories, in companies which want to verify the calibration status of their material testing machines and further in other sectors.

### State of the art

In the field of testing the mechanical properties of materials, the need is felt to periodically check the calibration status of the machines to ensure the reliability of the results.

Among the various types of known material testing machines, those adapted to perform uniaxial tests can be identified, for example compression testing machines in accordance with ISO 7500-1 as described in standard UNI EN 196-1:2016 chapter 4.8.

Chapter 4.8 of regulation UNI EN 196-1:2016 addresses the requirements of machines for compression strength tests and requires that, if they do not comprise a ball joint, or if the ball joint is blocked, or further if the diameter of such ball joint is greater than 120 mm, it is necessary to use a compressor.

Such compressor, described in chapter 4.9 of the same standard, comprises a lower plate and an upper plate which are relatively movable for loading a test specimen. In use, the upper plate of the compressor receives a load from a relative upper plate of the test machine through an intermediate ball joint.

To ensure the correct execution of the test, it is essential that the intermediate ball joint is actually free to move so as to allow the upper plate to adapt to the shape of the specimen when resting abutted on the latter. Only in this way is it possible to maintain the measurement uncertainty within the precision class required by the regulation (minimum requirement required Class 1 - standard ISO 7500-1).

From the above it emerges that the verification of the efficiency of the intermediate ball joint of the compression plate is of fundamental importance to ensure its ability to evenly distribute the force on the surface of the test specimen. In fact, malfunctions of the intermediate joint do not allow ensuring the parallelism of the load surfaces during the test and therefore a uniaxial load status.

To date, the calibration verification of the machines used for compression tests in accordance with standard UNI EN 196-1:2016 is carried out without the compressor and therefore does not allow quantitatively verifying the efficiency conditions of the compressor and how its load distribution capacity can change the precision class value of the machine.

There are two known modes for verifying the proper functioning of the compressor.

The first mode involves the use of sensitive paper/sheets which are positioned between the compressor and a steel block of predetermined dimensions, in particular 40x40x40 mm. However, disadvantageously, the result thus obtained is purely qualitative and with greater uncertainty with respect to the precision class required by the aforementioned regulation.

Otherwise, the second mode - indicated in the standard UNI EN 196-1 in chapter 10.2.3 - envisages the statistical comparison of the test results with correction indices calculated on the historical performance of the tests carried out. However, disadvantageously, this is a retrospective assessment of the conditions of the compressor.

US2010/139359A1 discloses a system for verifying springs comprising a test apparatus provided with: a lower plate, and an upper plate movable in a controlled manner from and towards the lower plate for loading/unloading the spring to be tested.

Each plate is sensed by three load cells configured to verify the response of the spring to compression. It should be noted that the plates provided with load cells are part of the test apparatus (i.e., the apparatus for exerting uniaxial compression forces) itself, and therefore are not part of a system for verifying the calibration of the latter.

US2010/139359A1 also discloses a method for calibrating the test apparatus by means of a spring-loaded calibration device which, being spring-loaded, is passive, and therefore is not instrumented with force translators such as the measurement unit of the claimed calibration verification system.

### Object of the invention

In this context, the technical task underlying the present invention is to propose a system and a method for verifying the calibration of a machine adapted to perform uniaxial tests which overcome the drawbacks of the above mentioned prior art.

In particular, an object of the present invention is to provide a system and a method for verifying the calibration of a machine adapted to perform uniaxial tests - for example, in accordance with ISO 7500-1 as described in standard UNI EN 196-1:2016 chapter 4.8 - capable of providing a quantitative evaluation characterized by high accuracy and availability.

It is further an object of the present invention to provide a system and a method for verifying the calibration of a machine adapted to perform uniaxial tests conveniently and quickly, which can be carried out shortly before the tests themselves.

It is further an object of the present invention to provide a system and a method which allows to obtain a metrological confirmation of the machine adapted to perform uniaxial tests with the compressor installed and available at all times.

It is further an object of the present invention to provide a system and a method for verifying the calibration of a machine adapted to perform uniaxial tests which, during the verification test, allows preventing the waste of materials and additives for reaching the breaking load conforming to the product.

### SUMMARY OF THE INVENTION

In accordance with the present invention, the technical task indicated and the specified objects are achieved by a system and a method for verifying the calibration of a machine adapted to perform uniaxial tests in accordance with one or more of the claims below.

In particular, the present invention proposes to provide a system for verifying the calibration of a machine adapted to perform uniaxial tests on a specimen (hereinafter also referred to as "test machine" or simply "machine") configured to determine the distribution of the force exerted.

Such system comprises a measurement unit available in the test machine in place of the specimen and a reading unit placed in signal communication with the measurement unit to receive and provide in output measurement signals representative of the force exerted by the machine on a measurement surface thereof.

The measurement unit comprises at least three force transducers, each functionally associated with a respective measurement portion of the measurement surface. During the execution of a test to verify the calibration status of the machine, the transducers generate respective measurement signals representative of the force exerted by the machine on the measurement portion associated therewith.

Such measurement signals, returned in output by means of the reading unit, allow identifying uneven distributions of the force exerted by the machine (non-uniaxial load status) and therefore malfunctions such as, for example, the gripping of the ball joint of the compressor.

Therefore, advantageously, the system and the method which are the subject matter of the present invention allow quantitatively verifying the calibration status of the machine in an accurate and repeatable manner.

Furthermore, since the operation of verifying the calibration status simply requires placing the measurement unit in the machine instead of the specimen and operating the machine, it is quickly and conveniently drivable whenever deemed necessary, even near the test on a specimen to be tested.

It should further be noted that the measurement unit can be used to perform multiple checks on the calibration of the machine; therefore, the method and system which are the subject matter of the present invention allow periodic checks to be carried out without test materials and additives being wasted or consumed.

It is also true that the method and the system which are the subject matter of the present invention, requiring only to arrange the measurement unit in place of the specimen, allow obtaining the metrological confirmation of the machine with the compressor installed.

### LIST OF FIGURES

Further features and advantages of the present invention will become more apparent from the description of an exemplary, but not exclusive, and therefore nonlimiting, preferred embodiment of a system for verifying the calibration of a machine adapted to perform uniaxial tests, as illustrated in the appended drawings, in which:
- Figure 1 shows a front view of a machine adapted to perform uniaxial tests with the system for verifying the calibration of the machine in the verification position,
- Figure 2 shows an enlargement of some details of Figure 1;
- Figure 3 shows a component of the system for verifying the calibration of the machine of Figure 1.

### DETAILED DESCRIPTION

The object of the present description is a system 1 for verifying the calibration of a machine 100 adapted to perform (static) uniaxial tests on a specimen (not shown in the figures) such as, for example, a compression test machine in accordance with ISO 7500-1 as described in standard UNI EN 196-1:2016 chapter 4.8.

Such machine comprises a lower plate 102 adapted to support the specimen to be tested and an upper plate 103 movable to and from the lower plate 102 along an axial direction A-A to stress the specimen.

The movement of the upper plate 103 is driven by means of special machine actuating members (not shown) which, after bringing the upper plate 103 or a special loading element (e.g., upper plate 101b of the compressor 101 - introduced below) abutting against the specimen, are configured to stress it (compression) along the axial direction A-A to verify the mechanical properties thereof.

Preferably, the machine 100 comprises a compressor 101, i.e., a mechanical member driven by the mutual movement of the aforesaid plates 102, 103 to exert a compression force along the axial direction A-A on the specimen.

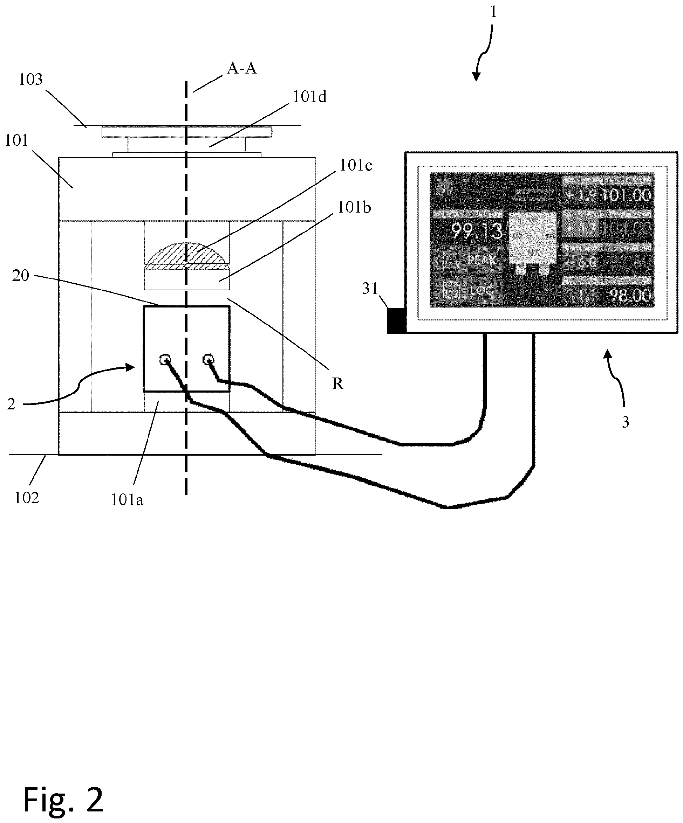

According to an aspect shown in Figure 2, the compressor 101 comprises in turn a lower plate 101a resting on the lower plate 102 of the machine 100, and a movable upper plate 101b, opposite the upper plate 101a, and driven along the axial direction A-A by the upper plate 103 of the machine 100. The lower plate 101a of the compressor can also be incorporated in the lower plate 102 of the machine 100.

In use, the lower plate 101a supports and offers abutment to the specimen while the upper surface 101b, after being brought into abutment with the specimen, exerts a compression force F on the latter.

The lower and upper plate 101a, 100b are opposite along the axial direction A-A and, therebetween, define a test region R adapted to receive the specimen to be tested or, during the machine calibration verification operations, a measurement unit 2 of the system 1 described below. It should be specified that, if the machine lacks the aforesaid compressor 101, the test region R is defined by the lower and upper plate 102, 103 of the machine 100.

According to an aspect, the compressor 101 comprises a ball joint 101c on which the upper plate 101b is mounted so as to freely arrange itself at different angles with respect to the lower plate 101a. In use, the ball joint 101c allows the upper plate 101b to initially adapt to the shape of the specimen, to then remain fixed thereto during the test.

With reference to the embodiment of Figure 2, the ball joint 101c is mounted on a sliding assembly 101d of the compressor 101, configured to move the ball joint 101c itself, and thus the upper plate 101b, along the axial direction A-A. In use, the sliding assembly 101d is driven by the movement of the upper plate 103 of the machine 100.

According to an embodiment, the compressor 101 is a compression device as described in standard EN 196-1:2016 chapter 4.9.

The system 1 according to the present invention is configured to determine the distribution of the force F exerted by the machine 100 on the specimen along the axial direction A-A during the execution of a verification test.

It should be noted that the analysis of the force distribution F on the specimen allows quantitatively determining whether the machine 100 (possibly also comprising the compressor 101) is operating correctly, i.e., imparting a uniaxial stress.

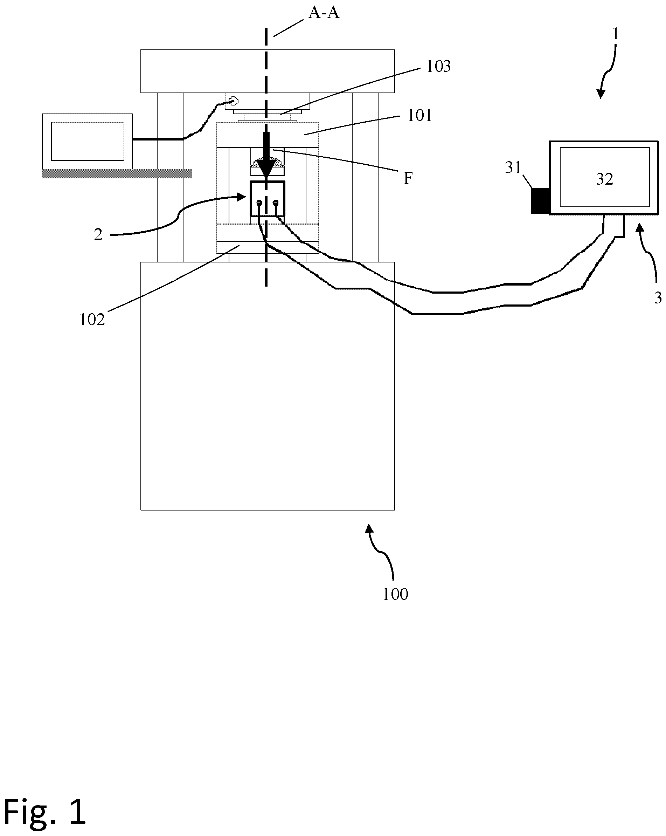

With reference to Figures 1 and 2, the system 1 comprises a measurement unit 2 configured to be arranged in the machine 100 in place of the specimen so that, during the verification test of the calibration status, the machine 100 can act thereon, imparting a mechanical stress thereto. The measurement unit 2, during the verification operations of the machine 100, thus occupies the aforesaid test region R instead of the specimen.

In other words, during the calibration verification step, the measurement unit 2 replaces the specimen, taking the place thereof.

According to an aspect, the measurement unit 2 has a three-dimensional shape equal to that of the specimen as defined in a reference standard for performing uniaxial tests such as, for example, UNI EN 196-1:2016, ASTM C109/C109M-20, or ASTM C349-18. The measurement unit 2 is therefore geometrically similar to the specimen indicated in the reference standard of the uniaxial test to be conducted and for which it is necessary to verify the calibration status of the machine 100. For example, if the reference standard for the uniaxial test is UNI EN 196-1:2016, the measurement unit 2 has a 40x40x40mm prismatic shape.

The measurement unit 2 has a shape, preferably cubic or cylindrical, configured to return high performances of high linearity in deformation and sensitivity under high mechanical compression stress.

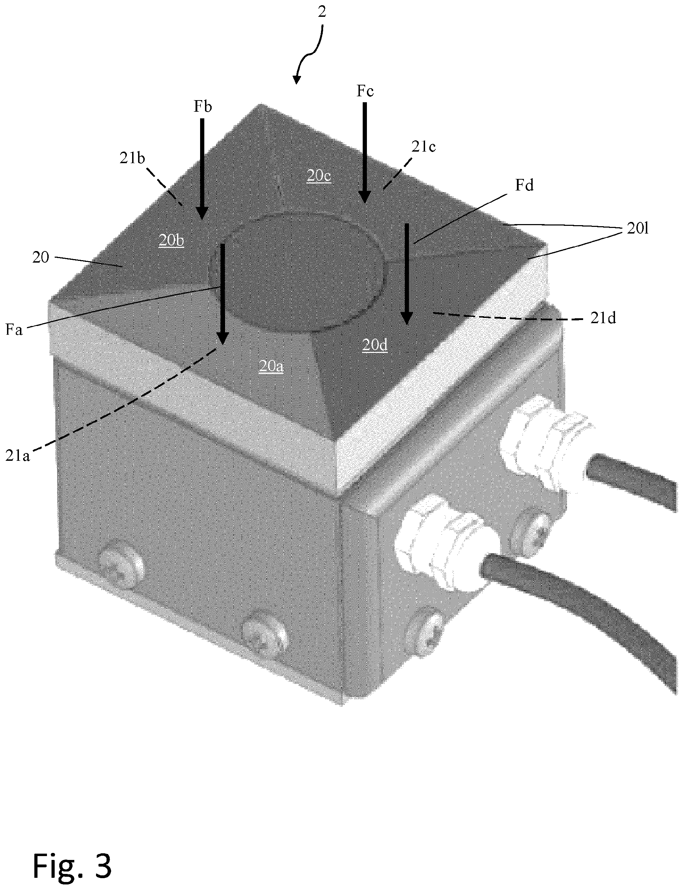

With reference to Figure 3, the measurement unit has a measurement surface 20 on which the machine 100 acts during the verification test.

According to an aspect shown in Figure 3, the machine 100 during the verification test acts directly on the measurement surface 20. Therefore, preferably, the measurement surface 20 is configured to be directly stressed by the machine 100 during the verification test.

If the machine 100 comprises a compressor 101, it is the latter which acts directly on the measurement surface 20 of the measurement unit 2 during the verification test. The measurement surface 20 is therefore preferably configured to be directly stressed by the compressor 101 of the machine 100 during the verification test. For example, during the verification test, the measurement surface 20 is configured to abuttingly receive the compressor 101 which stresses it.

In other words, preferably, the measurement surface 20 of the measurement unit 2 comes into direct contact with the machine 100 during the verification test.

The fact that, during the verification test, the machine 100 directly stresses the measurement surface 20 - for example, by abutting against the measurement surface and stressing it - allows improving the accuracy of the verification of the calibration status and, in particular, allows directly detecting uneven distributions of the force exerted by the machine (i.e., non-uniaxial load status).

According to an aspect, the measurement surface 20 is flat and oriented perpendicular to the axial direction A-A when the measurement unit 2 is arranged in the machine 100.

Preferably, during the verification test, the measurement surface 20 comes into contact with the upper plate 101b of the compressor 101 or, if the latter is not present, with the upper plate 103 of the machine 100. It means that, during the verification test, the machine 100 acts directly on the measurement surface 20 through the upper plate 101b (or lower plate 101a) of the compressor 101 or the upper plate 103 (or lower plate 102) of the machine 100. It follows therefrom that the measurement surface is therefore preferably configured to abuttingly receive the upper plate 101b of the compressor 101 or the upper plate 103 of the machine 100.

It should be noted that the correct operation of the ball joint 101c allows the upper plate 101b of the compressor 101 to freely orient itself in a manner parallel to the measurement surface 20 of the measurement unit 2 during the initial steps of the verification test (i.e., when the upper plate 101b comes into contact with the measurement unit 2).

The measurement surface 20 is physically divided, or at least ideally dividable, into distinct measurement portions 20a, 20b, 20c, 20d. During the execution of the calibration verification test of the machine 100, the force F exerted on the measurement unit 2 is distributed over the measurement portions 20a, 20b, 20c, 20d. In Figure 3, the components of the force F exerted by the machine 100 which are distributed on the measurement portions 20a, 20b, 20c, 20d are indicated by respective arrows marked as Fa, Fb, Fc, Fd.

The measurement unit 2 comprises at least three force transducers 21a, 21b, 21c, 21d, each functionally associated with a respective measurement portion 20a, 20b, 20c, 20d. Such force transducers 21a, 21b, 21c, 21d are configured to generate respective measurement signals representative of the force Fa, Fb, Fc, Fd exerted on the measurement portion 20a, 20b, 20c, 20d with which they are associated.

It should therefore be noted that the force transducers 21a, 21b, 21c, 21d allow detecting an uneven force distribution on the measurement surface 20 which is representative of a non-uniaxial load status and, therefore, of a malfunction of the machine 100 (e.g., failure of the spherical joint 101c which does not allow the free orientation of the upper plate 101b of the compressor 101).

In the embodiment of Figure 3, the measurement surface 20 has a quadrangular geometric shape peripherally delimited by four sides 201, and the measurement unit 2 comprises four force transducers 21a, 21b, 21c, 21d. Each force transducer 21a, 21b, 21c, 21d is functionally associated with a respective measurement portion 20a, 20b, 20c, 20d comprising one of such sides 20l.

Preferably, the measurement surface 20 is square and the sides 20l have an extension equal to 40 mm.

According to an embodiment, each force transducer 21a, 21b, 21c, 21d comprises a dedicated strain gauge bridge.

With reference to Figures 1 and 2, the system 1 which is the subject matter of the present disclosure further comprises a reading unit 3 placed in signal communication with the measurement unit 2, for example, by means of a wired connection.

In alternative embodiments, a signal communication of the wireless type is implementable by integrating known data sending and receiving modules in the measurement unit 2 and in the reading unit 3.

The reading unit 3 is configured to receive the measurement signals in input from the force transducers 21a, 21b, 21c, 21d of the measurement unit 2 and provide them in output, for example, by means of a monitor 32 which, in the embodiment shown in Figures 1 and 2, is part of the reading unit 3 itself. Such monitor can be used to show the force (N) or pressure (MPa) values detected by each force transducer and/or their temporal histories.

According to an embodiment, the reading unit 3 comprises a processing module 31 configured to process the measurement signals in input and provide in output processed measurement signals in addition to or in place of the original measurement signals.

For example, the processing module 31 is used to process the measurement signals acquired by the force transducers 21a, 21b, 21c, 21d, comparing them with each other to determine percentage values (processed measurement signals) representative of the distribution of the force F exerted by the machine 100 during the verification test on the measurement portions 20a, 20b, 20c, 20d.

The processing module 31 can also be used to process the measurement signals, comparing them with reference values to determine a calibration level (processed measurement signals) of the machine 100. Such comparison operation with reference values can also be carried out on the aforementioned percentage values.

The processing module 31 can also be configured to calculate the average value (processed measurement signal) between the force values detected by the force translators 21a, 21b, 21c, 21d of the measurement unit 2.

The reading unit 3 can further comprise a memory (not shown in the figures) or be configured to communicate with an external memory (not shown in the figures) to save the measurement signals and/or the processed measurement signals thereon.

According to an aspect, the system 1 comprises the machine 100 adapted to perform uniaxial tests.

The present invention further relates to a method for verifying the calibration of the machine 100 adapted to perform uniaxial (static) tests by using the system 1 disclosed above.

Such method comprises a first step in which the measurement unit 2 of the system 1 is arranged in the machine 100 in place of a specimen, i.e. it replaces the specimen, so that the machine 100 is able to stress the measurement surface 20 thereof during the verification test.

Preferably, in this first step, the measurement unit 2 is arranged in the test region R, thus being interposed between the lower plate 101a and the upper plate 101b of the compressor 101 as shown in Figure 2.

When arranged in the machine 100, the measurement unit 2 has the measurement surface 20 oriented perpendicularly to the axial direction A-A and facing the upper plate 101b of the compressor 101.

After having arranged the measurement unit 2 in the machine 100, the method involves carrying out the test to verify the calibration of the machine 100. In this step, the machine 100 acts on the measurement surface 20 of the measurement unit 2 - if present, through the compressor 101 - performing a predetermined uniaxial test, for example, following one of the aforementioned reference standards.

During the verification test of the calibration of the machine 100, the method involves acquiring measurement signals representative of the force F exerted by the machine on the measurement portions 20a, 20b, 20c, 20d of the measurement surface 20 by means of the respective force transducers 21a, 21b, 21c, 21d of the measurement unit 2.

The measurement signals thus acquired are then transferred from the measurement unit 2 to the reading unit 3 which provides them in output so as to allow the evaluation of the calibration status of the machine 100.

Preferably, downstream of the reception of the measurement signals by the reading unit 3 and upstream of their provision in output by the same unit, the method includes a step of processing such measurement signals.

The processing step can comprise a first processing step in which the processing module 31 of the reading unit 3 processes the measurement signals acquired by the force transducers 21a, 21b, 21c, 21d, by comparing them with each other, to determine percentage values representative of the distribution of the force F exerted by the machine 100 during the verification test on the measurement portions 20a, 20b, 20c, 20d. Such percentage values can be provided in output by the reading unit 3 as a replacement for or in addition to the measurement signals.

The processing step can further comprise a second processing step, additional to or replacing the first elimination step, in which the processing module 31 of the reading unit 3 processes the measurement signals, comparing them with reference values to determine a calibration level of the machine 100. It should be specified that the comparison operation with the reference values can also be carried out with percentage values obtained from the first processing step. Once the calibration level has been calculated, it is provided in output by the reading unit in addition to or as a replacement for the measurement signals.

According to a possible embodiment, the calibration level is expressed by a different colour of the percentage values, and/or of the force (N) or pressure (MPa) values detected by each force transducer 21a, 21b, 21c, 21d.

Obviously a person skilled in the art will be able to make numerous equivalent modifications to the variants set forth above, without thereby departing from the scope of protection as defined by the appended claims.

## Claims

1. System (1) for verifying the calibration of a machine (100) adapted to perform uniaxial tests on a specimen, said system (1) being configured to determine the distribution of a force (F) exerted by the machine (100) along an axial direction (A-A) during the execution of a verification test, said system (100) comprising:
- a measurement unit (2) having a measurement surface (20) and comprising at least three force transducers (21a, 21b, 21c, 21d), each force transducer (21) being functionally associated with a respective measurement portion (20a, 20b, 20c, 20d) of the measurement surface (20) and configured to generate a measurement signal representative of the force (Fa, Fb, Fc, Fd) exerted on the measurement portion (20a, 20b, 20c, 20d) with which it is associated, the measurement unit (2) being configured to be arranged in the machine (100) in place of the specimen so that said machine (100) acts directly on the measurement surface (20) during said verification test,
- a reading unit (3) placed in signal communication with the measurement unit (2) to receive in input the measurement signals from the force transducers (21a, 21b, 21c, 21d) and provide them in output.

2. System (1) according to claim 1, wherein the measurement unit (2) has a three-dimensional conformation equal to that of the specimen as defined in a reference standard for the execution of uniaxial tests.

3. System (1) according to claim 2, wherein the reference standard for the execution of uniaxial tests is one of the following: UNI EN 196-1:2016, ASTM C109/C109M-20, and ASTM C349-18.

4. System (1) according to any one of the preceding claims, wherein:
- the machine (100) is adapted to perform compression tests in compliance with ISO 7500-1 standard as described in standard UNI EN 196-1:2016 chapter 4.8, said machine (100) comprising a compression device (101) as described in standard UNI EN 196-1:2016 chapter 4.9,
- the measurement unit (2) is configured to be arranged in the machine (100) so that the compression device (101) can directly act on the measurement surface (20) of the measurement unit (2) during the verification test of the calibration of the machine (100).

5. System (1) according to any one of the preceding claims, wherein:
- the measurement surface (20) has a quadrangular shape delimited peripherally by four sides (20l),
- the measurement unit (2) comprises four force transducers (21a, 21b, 21c, 21d), each functionally associated with a respective measurement portion (20a, 20b, 20c, 20d) comprising one of said sides (20l).

6. System (1) according to any one of the preceding claims, wherein each force transducer (21a, 21b, 21c, 21d) comprises a dedicated strain gauge bridge.

7. System (1) according to any one of the preceding claims, wherein the reading unit (3) comprises a processing module (31) configured to process the measurement signals in input and provide in output processed measurement signals in addition to or in place of the measurement signals.

8. System according to any one of the preceding claims, wherein the measurement surface (20) is flat and oriented perpendicular to the axial direction (A-A) when the measurement unit (2) is arranged in the machine (100).

9. Method for verifying the calibration of a machine (100) adapted to perform uniaxial tests by using a system (1) according to any one of the preceding claims, said method comprising the steps of:
- providing a machine (100) adapted to perform uniaxial tests;
- providing a measurement unit (2) having a measurement surface (20) and comprising at least three force transducers (21a, 21b, 21c, 21d), each force transducer (21) being functionally associated with a respective measurement portion (20a, 20b, 20c, 20d) of the measurement surface (20) and configured to generate a measurement signal representative of the force (Fa, Fb, Fc, Fd) exerted on the measurement portion (20a, 20b, 20c, 20d) with which it is associated;
- providing a reading unit (3) placed in signal communication with the measurement unit (2) to receive in input the measurement signals from the force transducers (21a, 21b, 21c, 21d) and provide them in output;
- arranging the measurement unit (2) of the system (1) in the machine (100) in place of a specimen so that said machine (100) is able to stress the measurement surface (20) during a verification test,
- carrying out the verification test in which the machine (100) acts on the measurement surface (20) of the measurement unit (2) by executing a predetermined uniaxial test,
- during the verification test, acquiring measurement signals representative of the force (F) exerted by the machine on the measurement portions (20a, 20b, 20c, 20d) of the measurement surface (20) by means of the respective force transducers (21a, 21b, 21c, 21d) of the measurement unit (2),
- transferring the measurement signals from the measurement unit (2) to the reading unit (3),
- providing in output the measurement signals by means of the reading unit (3).

10. Method according to claim 9 comprising at least a first processing step in which the processing module (31) of the reading unit (3) processes the measurement signals acquired by the force transducers (21a, 21b, 21c, 21d) by comparing them with each other to determine percentage values representative of the distribution of the force (F) exerted by the machine (100) during the verification test on the measurement portions (20a, 20b, 20c, 20d), said percentage values being provided as a replacement for or in addition to the measurement signals.

11. Method according to claim 9 or 10 comprising a second processing step in which the processing module (31) of the reading unit (3) processes the measurement signals by comparing them with reference values to determine a calibration level of the machine (100), said calibration level being provided as output in replacement or in addition to the measurement signals.
